# EUROPÄISCHE PATENTSCHRIFT

(11) **EP 1 873 083 B1**
(45) Veröffentlichungstag und Bekanntmachung des Hinweises auf die Patenterteilung: **03.06.2009**
(21) Anmeldenummer: 07011839.3
(22) Anmeldetag: 16.06.2007
(51) Int. Cl.: B65D 75/58

(54) **Folienbeutel**
Plastic film bag
Sachet plastique

(30) Priorität: 28.06.2006 DE 102006029893
(43) Veröffentlichungstag der Anmeldung: 02.01.2008
(73) Patentinhaber: Nordenia Deutschland Halle GmbH, 33790 Halle (DE)
(72) Erfinder: Kujat, Marcus, 49090 Osnabrück (DE); Brauer, Jochen, 49393 Lohne (DE); Kruse, Alfons, 49413 Dinklage (DE)
(74) Vertreter: Albrecht, Rainer Harald

(56) Entgegenhaltungen:
- FR-A1- 2 780 956
- JP-A- 11 208 681
- US-A1- 2004 208 402

## Beschreibung

Die Erfindung betrifft einen Folienbeutel, der durch Falten einer Folie geformt ist, eine Frontfläche, eine Rückfläche, eine eingelegte erste Seitenfalte sowie eine eingelegte zweite Seitenfalte aufweist und durch eine Längssiegelnaht sowie eine Kopfsiegelnaht verschlossen ist,
wobei an der Innenfläche des Folienbeutels unterhalb der Kopfsiegelnaht ein Wiederverschlussstreifen befestigt ist, der die erste Seitenfalte lösbar mit der benachbarten Frontfläche und Rückfläche des Beutels verbindet, und
wobei die erste Seitenfalte eine wiederverschließbare Schütte bildet, wenn ein Beutelabschnitt oberhalb des Wiederverschlusstreifens zur Füllgutentnahme abgetrennt oder eingerissen wird.

Folienbeutel mit dem beschriebenen Aufbau eignen sich zur Verpackung von Schüttgut, beispielsweise Trockenfutter für Tiere, und weisen einen Wiederverschluss auf, der es erlaubt, den Inhalt der Verpackung in Teilmengen, also portionsweise, auszuschütten bzw. zu entnehmen. Die Entnahme erfolgt durch eine Öffnung in der ersten Seitenfalte, wobei die Seitenfalte nach Öffnen des Wiederverschlusses herausziehbar ist und als Schütte genutzt werden kann. Die Öffnung ist wiederverschließbar. Der Wiederverschluss kann als so genannter Zipperverschluss ausgeführt werden, der leistenförmige Nut- und Federelemente aufweist, die manuell durch Druck miteinander verbunden werden können und dann eine Rast- bzw. Clipsverbindung bilden. Auch andere Wiederverschlüsse, z. B. Klettverschlüsse oder Wiederverschlüsse mit einem selbstklebenden Streifen, sind denkbar.

Ein Folienbeutel mit den eingangs beschriebenen Merkmalen ist aus WO 2004/092025 A2 bekannt. Er besteht aus einer zu einem Schlauch gefalteten Folie. Der durch Falten erzeugte Schlauch weist einliegende Seitenfalten auf und ist mantelseitig mittels einer Längssiegelnaht verschlossen. An der Innenfläche des Folienbeutels ist ein Wiederverschlussstreifen befestigt, der eine der Seitenfalten lösbar mit der benachbarten Front- und Rückfläche des Beutels verbindet. Der Wiederverschlussstreifen ist länger als die Breite der Seitenfalte und ist an den Innenseiten der Seitenfalte sowie den angrenzenden Beutelflächen, welche die Front- und Rückfläche des Beutels bilden, befestigt. Die Kopfsiegelnaht verschließt den oberen Rand des Folienbeutels und erstreckt sich als gerade Siegelnaht über die gesamte Breite des Folienbeutels. Zum erstmaligen Gebrauch muss ein Beutelabschnitt oberhalb des an der Beutelinnenseite angeordneten Wiederverschlusses entlang einer Schwächungslinie oder einer an der Beutelaußenseite aufgedruckten Markierung abgetrennt werden. Ohne aufgedruckte Hinweise ist für einen Nutzer nicht ersichtlich, wie und an welcher Stelle der verschlossene Folienbeutel geöffnet werden muss. Die richtige Handhabung erschließt sich nicht intuitiv. Ferner ist nachteilig, dass sich nach dem Abtrennen des Folienabschnittes eine Öffnung im Folienbeutel bildet, die sich von dem Wiederverschluss vertikal bis zum oberen Rand des Folienbeutels erstreckt und nicht verschlossen werden kann. Ein weiterer Nachteil ist die unbefriedigende Formstabilität des Folienbeutels. Beim Gebrauch öffnet sich die Schütte sehr weit, wobei der Beutel auf der Entnahmeseite weitgehend seine Form verliert. Aufgrund der geringen Formstabilität ist die Handhabung des geöffneten Beutels schwierig. Insbesondere bei großen Beuteln erfordert die Handhabung des geöffneten Beutels und dosierte Entnahme von Füllgut erhebliches Geschick des Benutzers.

Aus DE 201 15 181 U1 ist ebenfalls ein Seitenfaltenbeutel mit einer wiederverschließbaren Entnahmeöffnung in einer Seitenfalte bekannt. Die Kopfsiegelnaht ist eine gerade Naht und verschließt den oberen Rand des Folienbeutels, so dass auch bei diesem Beutel nicht ohne weiteres sofort ersichtlich ist, wie und an welcher Stelle der Folienbeutel für den erstmaligen Gebrauch geöffnet werden muss. Parallel zu der Kopfsiegelnaht ist eine weitere horizontale Naht vorgesehen, die sich von der Außenseite der zweiten Seitenfalte bis zu den an der Innenseite der Front- und Rückfläche befestigten Enden des Wiederverschlussstreifens erstreckt. Da diese Siegelnaht an die Enden des Wiederverschlusses angrenzt, ist der Beutel bei geschlossenem Wiederverschluss auch im Gebrauch verhältnismäßig dicht. Die Seitenfalten bestehen aus separaten, V-förmig gefalteten Folienstreifen, die zwischen Frontfläche und Rückfläche des Beutels eingelegt und durch Längssiegelnähte mit diesen verbunden sind. Zur Abdichtung des Folienbeutels sind breite Nähte notwendig, die formsteife Außenkanten des Beutels bilden und dem Folienbeutel eine gute Formstabilität verleihen. Nachteilig ist, dass die Siegelnähte die Öffnungsbreite des Wiederverschlusses erheblich einschränken, was die Entnahme insbesondere von größerem stückigen Füllgut erschwert.

Vor diesem Hintergrund liegt der Erfindung die Aufgabe zugrunde, einen Seitenfaltenbeutel mit einer im Bereich einer Seitenfalte angeordneten wiederverschließbaren Entnahmeöffnung anzugeben, der sich zum erstmaligen Gebrauch intuitiv öffnen lässt. Des Weiteren soll der Beutel beim Gebrauch formstabil und gut handhabbar sein.

Die Aufgabe wird erfindungsgemäß durch einen Folienbeutel mit den Merkmalen des Anspruches 1 gelöst. Erfindungsgemäß ist die Kopfsiegelnaht stufenförmig ausgebildet, wobei ein erster Abschnitt der Kopfsiegelnaht sich von der Außenkante der zweiten Seitenfalte bis zu den an der Innenseite der Front- und Rückflächen befestigten Enden des Wiederverschlussstreifens erstreckt und wobei die Kopfsiegelnaht einen daran stufenförmig anschließenden zweiten Abschnitt aufweist, der einen nach oben vorspringenden Beutelabschnitt an den Rändern dicht verbindet und sich bis zur Außenkante des Beutels entlang der ersten Seitenfalte erstreckt. Der vorspringende Beutelabschnitt ist ganz oder teilweise entlang einer oberhalb des Wiederverschlussstreifens angeordneten Trennlinie abtrennbar. Durch Abtrennen des vorspringenden Beutelabschnitts oder eines kopfseitigen Teils des Beutelabschnitts wird der Beutel zum erstmaligen Gebrauch geöffnet. Die einliegende Seitenfalte bildet eine wiederverschließbare Schütte.

Es erschließt sich für den Benutzer intuitiv, dass der nach oben vorspringende Beutelabschnitt zum erstmaligen Öffnen des Folienbeutels abgetrennt werden muss. Dies schließt aber nicht aus, dass an der Außenseite des Folienbeutels zur Erleichterung der Handhabung Schnittlinien aufgedruckt werden. Eine hinsichtlich der Handhabung sehr vorteilhafte Ausgestaltung sieht vor, dass die Trennlinie zum Abtrennen des vorstehenden Beutelabschnitts aus einer Perforationslinie oder aus einer im Laserverfahren erzeugten Schwächungslinie besteht, wobei die Lasernaht vorzugsweise eine durch Heißsiegeln geformte Prägelinie überlagert. Die Anordnung einer im Laserverfahren erzeugten Schwächungslinie bietet sich insbesondere dann an, wenn der Folienbeutel aus einer mehrschichtigen Verbundfolie mit einer Außenschicht aus Polyester und einer inneren polyolefinischen Schicht besteht. Durch das Laserverfahren wird lediglich die äußere Polyesterschicht partiell abgetragen, während die innere polyolefinische Schicht unversehrt bleibt und die Dichtigkeit des noch original verschlossenen Beutels gewährleistet. Durch das Abtrennen des vorspringenden Beutelabschnitts wird der Wiederverschluss freigelegt. Nach Freilegen des Wiederverschlusses kann die Seitenfalte als Schütte ausgeklappt werden, wobei sich eine Schüttöffnung ergibt, die etwa doppelt so lang ist wie die Breite der Seitenfalte. Die große Öffnung erleichtert die Entnahme von größerem stückigen Füllgut.

Der Wiederverschlussstreifen bildet vorzugsweise einen Zipperverschluss und weist einen an der Innenfläche des Beutels befestigbaren Folienträger und an den Folienträger angeformte leistenförmige Verschlusselemente auf. Die leistenförmigen Verschlusselemente sind nach Art einer Nut- und Federverbindung durch Druck manuell miteinander verrastbar. Der Folienträger ist mit mindestens einer Siegelnaht und vorzugsweise mit zwei Siegelnähten, die beidseits der leistenförmigen Verschlusselemente angeordnet sind, mit der den Folienbeutel bildenden Folie verbunden.

Die Folienbeutel werden als flachgelegte Beutel gefertigt und erst später in Abfüllanlagen mit Füllgut befüllt, welches beispielsweise durch eine bodenseitige Öffnung oder - vor Anbringung der Kopfsiegelnähte - am oberen Ende des Beutels eingefüllt wird. Für den Transport werden die flachliegenden Folienbeutel gestapelt. Dabei werden die Wiederverschlusselemente an Falt- bzw. Knickkanten des Folienbeutels stark gebogen. Der Wiederverschlussstreifen für einen Zipperverschluss besitzt erhebliche elastische Rückstellkräfte, die dem Knicken entgegenwirken und zur Folge haben, dass die flachliegenden Folienbeutel im Bereich der ersten Seitenfalte aufspreizen. Mit zunehmender Stapelhöhe besteht dann die Gefahr, dass die aufeinander gestapelten Beutel verrutschen. Um dies zu vermeiden, sind die leistenförmigen Verschlusselemente des Wiederverschlussstreifens gemäß einer bevorzugten Ausführung der Erfindung an Knickkanten des Folienbeutels durch eine Ausstanzung oder einen Schnitt unterbrochen. Bei der Fertigung des Folienbeutels wird der Verschlussstreifen nach dem Aufbringen auf eine zunächst noch ebene Folienbahn an der Stelle, an der später die Knickkante der Seitenfalte ist bzw. die Folienbahn gefaltet wird, eingestanzt oder eingeschnitten.

Hinsichtlich des Anbringens des Wiederverschlussstreifens ergeben sich mehrere Möglichkeiten. Eine Ausführung der Erfindung sieht vor, dass die Länge des Wiederverschlussstreifens größer ist als die Breite der ersten Seitenfalte, wobei ein mittlerer Abschnitt des Wiederverschlussstreifens an der Innenfläche der Seitenfalte befestigt ist und wobei daran beidseitig anschließende Endabschnitte des Wiederverschlussstreifens mit den Innenseiten der Frontfläche bzw. der Rückfläche des Beutels verbunden sind. Der Wiederverschlussstreifen kann als Klettstreifen, als Streifen mit einer selbstklebenden Oberfläche oder als Zipperverschluss, dessen Formschlusselemente mit sich selbst verbindbar sind, ausgebildet sein. Eine andere Ausführung der Erfindung sieht vor, dass der an der Innenfläche der ersten Seitenfalte befestigte Wiederverschlussstreifen eine der Breite der Seitenfalte entsprechende Länge aufweist und sich bis zu den Außenkanten des Beutels erstreckt und dass an den Innenseiten der Frontfläche und der Rückfläche Verschlussstreifen befestigt sind, die mit dem an der ersten Seitenfalte angebrachten Wiederverschlussstreifen zusammenwirken. Geeignete Profile für die Wiederverschlussstreifen und Verschlussstreifen sind in DE 201 15 181 U1 beschrieben.

Die erste Seitenfalte erstreckt sich vorzugsweise bis zur Kopfsiegelnaht. Bei dieser Ausführung ist ein Teil des vorspringenden Beutelabschnitts mit einliegender Seitenfalte entlang der Trennlinie abtrennbar.

Der zweite Abschnitt der Kopfsiegelnaht setzt sich vorzugsweise aus einer vertikalen Siegelnaht und einer Quersiegelnaht zusammen, wobei sich die vertikale Siegelnaht parallel zur Seitenfalte erstreckt und die Frontfläche mit der Rückfläche des Folienbeutels verbindet und wobei die Quersiegelnaht sich von dem oberen Ende der vertikalen Siegelnaht bis zur Außenkante des Folienbeutels erstreckt.

Der erste Abschnitt der Kopfsiegelnaht, der sich von der Außenkante der zweiten Seitenfalte bis zu den Enden des Wiederverschlussstreifens erstreckt, grenzt an die Enden des Wiederverschlussstreifens unmittelbar an, so dass sich zwischen dem Wiederverschluss und dem nach Abtrennen des vorspringenden Beutelabschnitts verbleibenden Teil der Kopfsiegelnaht keine störende Öffnung bildet. Der wiederverschließbare Folienbeutel ist daher auch im Gebrauch verhältnismäßig dicht. Der erste Abschnitt der Kopfsiegelnaht, welcher sich von der Außenkante der zweiten Seitenfalte bis zu den Enden des Wiederverschlusses erstreckt, kann einen Anschlussbereich für die Enden des Wiederverschlussstreifens aufweisen, der als kurze vertikale Verbindungsnaht zwischen der Front- und Rückfläche ausgebildet ist. Bei dieser Ausführung besteht die Möglichkeit, den Wiederverschlussstreifen etwas tiefer anzuordnen als den ersten Abschnitt der Kopfsiegelnaht.

Gemäß einer bevorzugten Ausführung der Erfindung bestehen die Außenkanten zwischen der ersten Seitenfalte und der angrenzenden Front- bzw. Rückfläche aus Faltkanten, die durch Längssiegelnähte versteift sind. Die Längssiegelnähte erstrecken sich bis zur Kopfsiegelnaht und sind vorzugsweise im Bereich des Wiederverschlussstreifens unterbrochen. Zur Kantenversteifung vorgesehene Längssiegelnähte verleihen dem Folienbeutel auch in geöffnetem Zustand eine beachtliche Formstabilität, so dass auch eine gute Handhabung von großen Folienbeuteln gewährleistet ist. Etwaige Unterbrechungen der Längssiegelnähte, insbesondere im Bereich des Wiederverschlussstreifens, haben auf die Dichtigkeit des Folienbeutels keinen nachteiligen Einfluss, da die Außenkante der ersten Seitenfalte Faltkanten sind und die zusätzlich angebrachten Längssiegelnähte keine Dichtungsfunktion besitzen. Gemäß einer vorteilhaften Ausgestaltung der Erfindung sind alle vier Außenkanten des Folienbeutels durch Längssiegelnähte versteift. Die den Folienbeutel mantelseitig schließende Längssiegelnaht kann in eine Kante, welche die Seitenfalte begrenzt, integriert werden. Bei dieser Ausführung verbindet die den Folienbeutel mantelseitig schließende Längssiegelnaht die zweite Seitenfalte mit der Front- oder Rückfläche des Beutels.

Im Folgenden wird die Erfindung anhand einer lediglich ein Ausführungsbeispiel darstellenden Zeichnung erläutert. Es zeigen schematisch:
- **Fig. 1**: einen noch original verschlossenen Seitenfaltenbeutel in einer perspektivischen Darstellung,
- **Fig. 2**: die Seitenansicht des in Fig. 1 dargestellten Seitenfaltenbeutels und

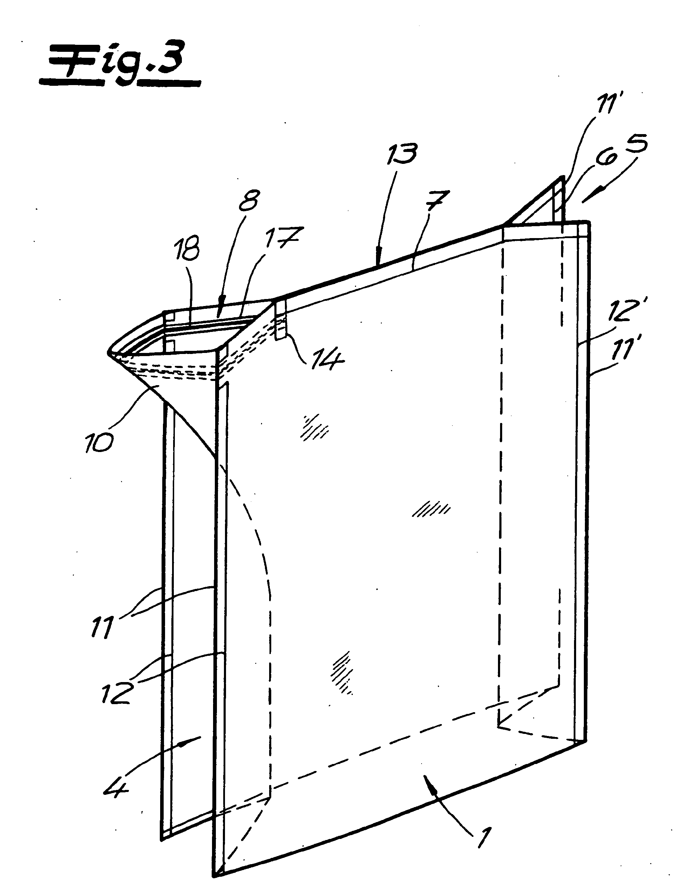

- **Fig. 3**: den in Fig. 1 dargestellten Seitenfaltenbeutel in geöffnetem Zustand in einer perspektivischen Darstellung.

Der in den Figuren dargestellte Folienbeutel ist durch Falten einer Folie 1 geformt und weist eine Frontfläche 2, eine Rückfläche 3, eine eingelegte erste Seitenfalte 4 sowie eine eingelegte zweite Seitenfalte 5 auf. Der Folienbeutel ist durch eine Längssiegelnaht 6, eine Kopfsiegelnaht 7 und eine nicht dargestellte Bodensiegelnaht verschlossen. An der Innenseite der Kopfsiegelnaht 7 ist ein Wiederverschlussstreifen 8 befestigt, der die erste Seitenfalte 4 lösbar mit der benachbarten Frontfläche 2 und Rückfläche 3 des Beutels verbindet. Zur Füllgutentnahme muss ein Beutelabschnitt 9 oberhalb des Wiederverschlussstreifens 8 abgetrennt werden. Danach bildet die erste Seitenfalte 4 eine wiederverschließbare Schütte 10. Die Außenkanten 11 zwischen der ersten Seitenfalte 4 und der angrenzenden Front- bzw. Rückfläche 2, 3 bestehen aus Faltkanten, die durch parallel verlaufende Längssiegelnähte 12 versteift sind. Die Längssiegelnähte 12 erstrecken sich von einer nicht dargestellten Bodensiegelnaht bis zur Kopfsiegelnaht 7 und sind zweckmäßig im Bereich des Wiederverschlussstreifens 8 unterbrochen. Auch die zweite Seitenfalte 5 ist von Außenkanten 11' begrenzt, die durch Längssiegelnähte 12' verstärkt sind. Die Längssiegelnähte 12' an den Außenkanten 11' der zweiten Seitenfalte 5 erstrecken sich ohne Unterbrechung von einer nicht dargestellten Bodensiegelnaht bis zur Kopfsiegelnaht 7. Die den Folienbeutel mantelseitig schließende Längssiegelnaht 6 ist in die Außenkante 11' der zweiten Seitenfalte 5 hinein verlegt und verbindet die zweite Seitenfalte 5 mit der Front- oder Rückfläche des Beutels. Diese Siegelnaht 6 erfüllt eine Dichtungsfunktion, während die den anderen Außenkanten zugeordneten Siegelnähte Faltkanten lediglich verstärken und keine Dichtungsfunktion haben.

Die Kopfsiegelnaht 7 ist stufenförmig ausgebildet. Sie weist einen ersten Abschnitt 13 auf, der sich von der Außenkante 11' der zweiten Seitenfalte bis zu den an der Innenseite der Front- und Rückflächen 2, 3 befestigten Enden des Wiederverschlussstreifens 8 erstreckt und an die Enden des Wiederverschlussstreifens angrenzt. Der erste Abschnitt 13 der Kopfsiegelnaht kann einen Anschlussbereich 14, für die Enden des Wiederverschlussstreifens 8 aufweisen, der als kurze, vertikale Verbindungsnaht zwischen der Front- und Rückfläche ausgebildet ist. An den ersten Abschnitt 13 der Kopfsiegelnaht schließt stufenförmig ein zweiter Abschnitt 15 an, der einen nach oben vorspringenden Beutelabschnitt 9 an den Rändern dicht verbindet und sich bis zu der Außenkante des Beutels entlang der ersten Seitenfalte 4 erstreckt. Der vorspringende Beutelabschnitt 9 ist entlang einer oberhalb des Wiederverschlussstreifens 8 angeordneten Trennlinie 16 abtrennbar.

Der Wiederverschlussstreifen 8 weist einen an der Innenfläche des Beutels befestigbaren Folienträger 17 und an den Folienträger angeformte leistenförmige Verschlusselemente 18 auf. Die leistenförmigen Verschlusselemente 18 bilden einen Zipperverschluss aus Formschlusselementen, die manuell durch Druck miteinander verrastbar sind. Die leistenförmigen Verschlusselemente 18 können an den Knickkanten des Folienbeutels durch eine Austanzung oder einen Schnitt unterbrochen sein. Die Länge des Wiederverschlussstreifens 8 ist größer als die Breite der ersten Seitenfalte 4, wobei ein mittlerer Abschnitt des Wiederverschlussstreifens an der Innenfläche der Seitenfalte 4 befestigt ist und wobei daran beidseitig anschließende Endabschnitte des Wiederverschlussstreifens 8 mit den Innenseiten der Frontfläche bzw. der Rückfläche 2, 3 des Beutels verbunden sind.

Die Trennlinie 16 zur Abtrennung des nach oben vorspringenden Beutelabschnitts 9 besteht vorzugsweise aus einer im Laserverfahren erzeugten Schwächungslinie, die beispielsweise eine aus Polyester bestehende Außenschicht der Folie schwächt und eine polyolefinische Innenschicht der Folie unversehrt lässt. Das Aufreißverhalten der Trennlinie 16 kann noch verbessert werden, wenn die Lasernaht mit einer durch Heißsiegeln gebildeten Prägelinie kombiniert wird und die Lasernaht sowie die Prägelinie sich überlagern.

Der zweite Abschnitt 15 der Kopfsiegelnaht 7 setzt sich aus einer vertikalen Siegelnaht und einer Quersiegelnaht zusammen, wobei sich die vertikale Siegelnaht parallel zur Seitenfalte erstreckt und die Frontfläche mit der Rückfläche des Folienbeutels verbindet und wobei die Quersiegelnaht sich von dem oberen Ende der vertikalen Siegelnaht bis zur Außenkante des Folienbeutels erstreckt.

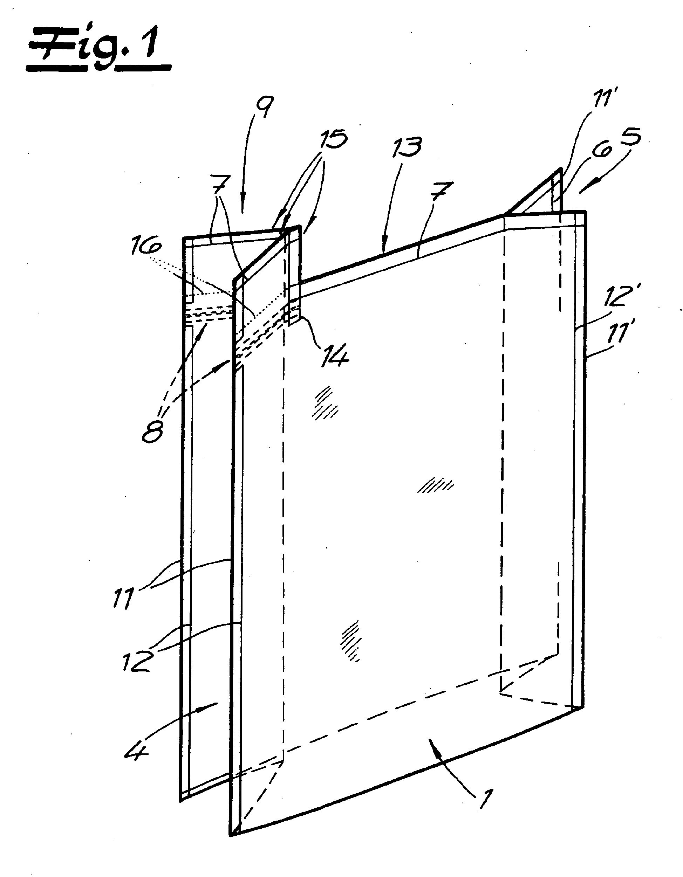

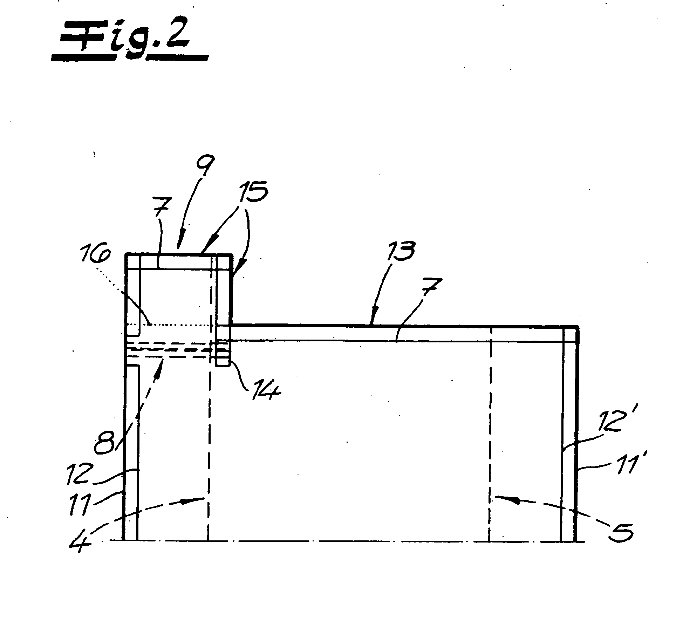

Gemäß dem in den Fig. 1 und 2 dargestellten Ausführungsbeispiel erstreckt sich die erste Seitenfalte 4 bis zur Kopfsiegelnaht 7. Entlang der Trennlinie 16 ist ein Teil des vorspringenden Beutelabschnitts 9 mit einliegender Seitenfalte abtrennbar.

## Patentansprüche

1. Folienbeutel, der durch Falten einer Folie (1) geformt ist, eine Frontfläche (2), eine Rückfläche (3), eine eingelegte erste Seitenfalte (4) sowie eine eingelegte zweite Seitenfalte (5) aufweist und durch eine Längssiegelnaht (6) sowie eine Kopfsiegelnaht (7) verschlossen ist,
wobei an der Innenfläche des Folienbeutels unterhalb der Kopfsiegelnaht (7) ein Wiederverschlussstreifen (8) befestigt ist, der die erste Seitenfalte (4) lösbar mit der benachbarten Frontfläche und Rückfläche (2, 3) des Beutels verbindet, und
wobei die erste Seitenfalte (4) eine wiederverschließbare Schütte (10) bildet, wenn ein Beutelabschnitt (9) oberhalb des Wiederverschlussstreifens (8) zur Füllgutentnahme abgetrennt oder aufgerissen wird,
**dadurch gekennzeichnet, dass** die Kopfsiegelnaht (7) stufenförmig ausgebildet ist, wobei ein erster Abschnitt (13) der Kopfsiegelnaht (7) sich von der Außenkante der zweiten Seitenfalte (5) bis zu den an der Innenseite der Front- und Rückflächen (2, 3) befestigten Enden des Wiederverschlussstreifens (8) erstreckt und wobei die Kopfsiegelnaht (7) einen daran stufenförmig anschließenden zweiten Abschnitt (15) aufweist, der einen nach oben vorspringenden Beutelabschnitt (9) an den Rändern dicht verbindet und sich bis zu der Außenkante (11) des Beutels entlang der ersten Seitenfalte (4) erstreckt, und dass der vorspringende Beutelabschnitt (9) ganz oder teilweise entlang einer oberhalb des Wiederverschlussstreifens (8) angeordneten Trennlinie (16) abtrennbar ist, dass die Außenkanten (11) des Folienbeutels zwischen der ersten Seitenfalte (4) und der angrenzenden Front- bzw. Rückfläche (2, 3) aus Faltkanten bestehen, die durch Längssiegelnähte (12) versteift sind, wobei die Längssiegelnähte (12) sich bis zur Kopfsiegelnaht (7) erstrecken und im Bereich des Wiederverschlussstreifens (8) unterbrochen sind.

2. Folienbeutel nach Anspruch 1, **dadurch gekennzeichnet, dass** der Wiederverschlussstreifen (8) einen an der Innenfläche des Beutels befestigbaren Folienträger (17) und an den Folienträger angeformte leistenförmige Verschlusselemente (18) aufweist.

3. Folienbeutel nach Anspruch 2, **dadurch gekennzeichnet, dass** die leistenförmigen Verschlusselemente (18) an Knickkanten des Folienbeutels durch eine Ausstanzung oder einen Schnitt unterbrochen sind.

4. Folienbeutel nach einem der Ansprüche 1 bis 3, **dadurch gekennzeichnet, dass** die Länge des Wiederverschlussstreifens (8) größer ist als die Breite der ersten Seitenfalte (4), wobei ein mittlerer Abschnitt des Wiederverschlussstreifens an der Innenfläche der Seitenfalte (4) befestigt ist und wobei daran beidseitig anschließende Endabschnitte des Wiederverschlussstreifens (8) mit den Innenseiten der Frontfläche bzw. der Rückfläche (2, 3) des Beutels verbunden sind.

5. Folienbeutel nach einem der Ansprüche 1 bis 3, **dadurch gekennzeichnet, dass** der an der Innenfläche der ersten Seitenfalte (4) befestigte Wiederverschlussstreifen (8) eine der Breite der Seitenfalten entsprechende Länge aufweist und sich bis zu den Außenkanten (11) des Beutels erstreckt und dass an den Innenseiten der Frontfläche und der Rückfläche (2, 3) Verschlussstreifen befestigt sind, die mit dem an der ersten Seitenfalte (4) angebrachten Wiederverschlussstreifen (8) zusammenwirken.

6. Folienbeutel nach einem der Ansprüche 1 bis 5, **dadurch gekennzeichnet, dass** die erste Seitenfalte (4) sich bis zur Kopfsiegelnaht (7) erstreckt, wobei entlang der Trennlinie (16) ein Teil des vorspringenden Beutelabschnitts (9) mit einliegender Seitenfalte abtrennbar ist.

7. Folienbeutel nach einem der Ansprüche 1 bis 6, **dadurch gekennzeichnet, dass** die Trennlinie (16) aus einer Perforationslinie besteht.

8. Folienbeutel nach einem der Ansprüche 1 bis 6, **dadurch gekennzeichnet, dass** die Trennlinie (16) aus der Kombination einer durch Heißsiegeln gebildeten Prägelinie und einer die Prägelinie überlagernden Lasemaht besteht.

9. Folienbeutel nach einem der Ansprüche 1 bis 8, **dadurch gekennzeichnet, dass** der zweite Abschnitt (15) der Kopfsiegelnaht (7) sich aus einer vertikale Siegelnaht und einer Quersiegelnaht zusammensetzt, wobei sich die vertikale Siegelnaht parallel zur Seitenfalte (4) erstreckt und die Frontfläche (2) mit der Rückfläche (3) des Folienbeutels verbindet und wobei die Quersiegelnaht sich von dem oberen Ende der vertikalen Siegelnaht bis zur Außenkante des Folienbeutels erstreckt.

10. Folienbeutel nach einem der Ansprüche 1 bis 9, **dadurch gekennzeichnet, dass** der erste Abschnitt (13) der Kopfsiegelnaht (7), welcher sich von der Außenkante der zweiten Seitenfalte (5) bis zu den Enden des Wiederverschlussstreifens (8) erstreckt, einen Anschlussbereich (14) für die Enden des Wiederverschlussstreifens (8) aufweist, der als kurze vertikale Verbindungsnaht zwischen der Front- und Rückfläche (2, 3) ausgebildet ist.

11. Folienbeutel nach einem der Ansprüche 1 bis 10, **dadurch gekennzeichnet, dass** die den Folienbeutel mantelseitig schließende Längssiegelnaht (6) die zweite Seitenfalte (5) mit der Front- oder Rückfläche (2, 3) des Beutels verbindet und eine Außenkante (11') bildet.

## Claims

1. Plastic film bag which is formed by folding a plastic film (1), has a front surface (2), a rear surface (3), an inserted first side gusset (4) as well as an inserted second side gusset (5), and is sealed by a longitudinal sealing seam (6) as well as a top sealing seam (7),
wherein a recloseable fastener strip (8) is fixed to the internal surface of the plastic film bag below the top sealing seam (7), which recloseable fastener strip (8) releasably connects the first side gusset (4) to the adjacent front surface and rear surface (2, 3) of the bag, and
wherein the first side gusset (4) forms a recloseable spout (10) when a bag section (9) above the recloseable fastener strip (8) is separated or ripped off for removing the filled goods,
**characterized in that** the top sealing seam (7) is formed in steps, wherein a first section (13) of the top sealing seam (7) extends from the outer edge of the second side gusset (5) to the ends of the recloseable fastener strip (8) which are fixed to the inner side of the front and rear surfaces (2, 3) and wherein the top sealing seam (7) has a second section (15) which adjoins the first section in a stepped manner, which second section (15) connects an upwardly projecting bag section (9) in a sealed manner at the edges and extends along the first side fold (4) as far as the outer edge (11) of the bag, and **in that** the projecting bag section (9) can be detached completely or partially along a separation line (16) arranged above the recloseable fastener strip (8), **in that** the outer edges (11) between the first side fold (4) and the adjoining front and rear surfaces (2, 3) of the plastic film bag consist of fold edges, which fold edges are strengthened by longitudinal sealing seams (12), wherein the longitudinal sealing seams (12) extend as far as the top sealing seam (7) and are interrupted in the region of the recloseable fastener strip (8).

2. Plastic film bag according to Claim 1, **characterized in that** the recloseable fastener strip (8) has a plastic film substrate (17) which can be fixed to the internal surface of the bag and strip-like locking elements (18) moulded onto the plastic film substrate (17).

3. Plastic film bag according to Claim 2, **characterized in that** the strip-like locking elements (18) are interrupted by a stamped out section or a cut at folding edges of the plastic film bag.

4. Plastic film bag according to one of Claims 1 to 3, **characterized in that** the length of the recloseable fastener strip (8) is greater than the width of the first side gusset (4), wherein a middle section of the recloseable fastener strip is fixed to the internal surface of the side gusset (4) and wherein end sections of the recloseable fastener strip (8), which adjoin the middle section on both sides, are connected to the inner sides of the front surface and the rear surface (2, 3) of the bag.

5. Plastic film bag according to one of Claims 1 to 3, **characterized in that** the recloseable fastener strip (8) fixed to the internal surface of the first side gusset (4) has a length corresponding to the width of the side gussets and extends as far as the outer edges (11) of the bag and **in that** fastener strips are fixed to the inner sides of the front surface and the rear surface (2, 3), which fastener strips cooperate with the recloseable fastener strip (8) attached to the first side gusset (4).

6. Plastic film bag according to one of Claims 1 to 5, **characterized in that** first side gusset (4) extends as far as the top sealing seam (7), wherein part of the projecting bag section (9) can be detached with the inserted side gusset along the separation line (16).

7. Plastic film bag according to one of Claims 1 to 6, **characterized in that** the separation line (16) consists of a perforation line.

8. Plastic film bag according to one of Claims 1 to 6, **characterized in that** the separation line (16) consists of the combination of an embossed line formed by heat sealing and a laser seam superposed on the embossed line.

9. Plastic film bag according to one of Claims 1 to 8, **characterized in that** the second section (15) of the top sealing seam (7) is made up of a vertical sealing seam and a transverse sealing seam, wherein the vertical sealing seam extends parallel to the side gusset (4) and connects the front surface (2) to the rear surface (3) of the plastic film bag and wherein the transverse sealing seam extends from the upper end of the vertical sealing seam to the outer edge of the plastic film bag.

10. Plastic film bag according to one of Claims 1 to 9, **characterized in that** the first section (13) of the top sealing seam (7), which section extends from the outer edge of the second side fold (5) to the ends of the recloseable fastener strip (8), has an attachment region (14) for the ends of the recloseable fastener strip (8), which attachment region (14) is formed as a short vertical connecting seam between the front and rear surfaces (2, 3).

11. Plastic film bag according to one of Claims 1 to 10, **characterized in that** the longitudinal sealing seam (6) which closes the plastic film bag at the peripheral side connects the second side gusset (5) to the front or rear surface (2, 3) of the bag and forms an outer edge (11').

## Revendications

1. Sac en plastique, qui est formé par pliage d'une feuille plastique (1), présente une surface avant (2), une surface arrière (3), une première pliure latérale intercalée (4) ainsi qu'une deuxième pliure latérale intercalée (5) et est fermé par un joint scellé longitudinal (6) ainsi qu'un joint scellé de tête (7),
dans lequel sur la surface interne du sac plastique en dessous du joint scellé de tête (7), une bande de refermeture (8) est fixée, qui relie la première pliure latérale (4) de manière amovible à la surface avant adjacente et la surface arrière (2,3) du sac, et
dans lequel la première pliure latérale (4) forme une poche (10) refermable, quand une section de sac (9) est séparée ou déchirée au dessus de la bande de refermeture (8) afin de retirer la matière de remplissage,
**caractérisé en ce que** le joint scellé de tête (7) est configuré en forme de gradin, dans lequel une première portion (13) du joint scellé de tête (7) s'étend de l'arête externe de la deuxième pliure latérale (5) jusqu'aux extrémités de la bande de refermeture (8) fixées sur le côté interne des surfaces avant et arrière (2,3) et dans lequel le joint scellé de tête (7) présente une deuxième portion (15) s'y rattachant en forme de gradin, qui relie de manière étanche une portion de sac (9) faisant saillie vers le haut aux bords et s'étend jusqu'à l'arête externe (11) du sac le long de la première pliure latérale (4), et **en ce que** la portion de sac (9) faisant saillie peut être séparée totalement ou partiellement le long d'une ligne de séparation (16) disposée au dessus de la bande de fermeture (8), **en ce que** les arêtes externes (11) du sac plastique sont constituées entre la première pliure latérale (4) et la surface avant, respectivement arrière (2,3) contiguë d'arêtes de pliage, qui sont rigidifiées par des joints scellés longitudinaux (12), dans lequel les joints scellés longitudinaux (12) s'étendent jusqu'au joint scellé de tête (7) et sont interrompus au niveau de la bande de refermeture (8).

2. Sac plastique selon la revendication 1, **caractérisé en ce que** la bande de refermeture (8) présente un support de feuille plastique (17) pouvant être fixé sur la surface interne du sac et des éléments de fermeture (18) en forme de baguette façonnés sur le support de feuille plastique.

3. Sac plastique selon la revendication 2, **caractérisé en ce que** les éléments de fermeture (18) en forme de baguette sont interrompus sur les arêtes de pli du sac plastique par un découpage à la matrice ou une découpe.

4. Sac plastique selon une des revendications 1 à 3, **caractérisé en ce que** la longueur de la bande de refermeture (8) est plus grande que la largeur de la première pliure latérale (4), dans lequel une portion centrale de la bande de refermeture est fixée sur la surface interne de la pliure latérale (4) et dans lequel les portions d'extrémité de la bande de refermeture (8) s'y rattachant des deux côtés sont reliées aux côtés internes de la surface avant, respectivement de la surface arrière (2,3) du sac.

5. Sac plastique selon une des revendications 1 à 3, **caractérisé en ce que** la bande de refermeture (8) fixée sur la surface interne de la première pliure latérale (4) présente une longueur correspondant à la largeur de la pliure latérale et s'étend jusqu'aux arêtes externes (11) du sac et **en ce que** des bandes de fermeture sont fixées sur les côtés internes de la surface avant et de la surface arrière (2,3), lesquelles coopèrent avec les bandes de refermeture (8) montées sur la première pliure latérale (4).

6. Sac plastique selon une des revendications 1 à 5, **caractérisé en ce que** la première pliure latérale (4) s'étend jusqu'au joint scellé de tête (7), dans lequel une partie de la portion de sac (9) faisant saillie peut être séparée avec la pliure latérale intercalée le long de la ligne de séparation (16).

7. Sac plastique selon une des revendications 1 à 6, **caractérisé en ce que** la ligne de séparation (16) est constituée d'une ligne perforée.

8. Sac plastique selon une des revendications 1 à 6, **caractérisé en ce que** la ligne de séparation (16) est constituée de la combinaison d'une ligne d'estampage formée par scellement à chaud et d'un joint au laser se superposant à la ligne d'estampage.

9. Sac plastique selon une des revendications 1 à 8, **caractérisé en ce que** la deuxième portion (15)du joint scellé de tête (7) se compose d'un joint scellé vertical et d'un joint scellé transversal, dans lequel le joint scellé vertical s'étend parallèlement à la pliure latérale (4) et relie la surface avant (2) à la surface arrière (3) du sac plastique et dans lequel le joint scellé transversal s'étend à partir de l'extrémité supérieure du joint scellé vertical jusqu'à l'arête externe du sac plastique.

10. Sac plastique selon une des revendications 1 à 9, **caractérisé en ce que** la première portion (13) du joint scellé de tête (7), qui s'étend de l'arête externe de la deuxième pliure latérale (5) jusqu'aux extrémités de la bande de refermeture (8), présente une zone de raccordement (14) pour les extrémités de la bande de refermeture (8), qui est configurée comme un court joint de liaison entre la surface avant et la surface arrière (2,3).

11. Sac plastique selon une des revendications 1 à 10, **caractérisé en ce que** le joint scellé longitudinal (6) fermant le sac plastique du côté du manteau relie la deuxième pliure latérale (5) avec la surface avant ou arrière (2,3) du sac et forme une arête externe (11').
